# EUROPEAN PATENT APPLICATION

(11) **EP 1 426 087 A1**
(43) Date of publication of application: **09.06.2004**
(21) Application number: 03425586.9
(22) Date of filing: 10.09.2003
(51) Int. Cl.: B01D 24/14, B01D 24/40, C02F 3/04

(54) **Sand bed device for filtering of liquids and particularly of water**

(30) Priority: 04.12.2002 IT PD20020308
(71) Applicant: Trevisan, Saverio Libero, 36061 Bassano del Grappa VI (IT)
(72) Inventor: Trevisan, Saverio Libero, 36061 Bassano del Grappa VI (IT)

(57) **Abstract**

Sand bed device for the filtering of liquids and particularly of water composed of a casing (5) subdivided in a first section (8) where to collect the water to be filtered, a second section (9) to house the sand bed which defines an influx surface (11) for the water to be filtered, in a third section (10) collecting the filtered water, means to introduce into the casing (5) the water to be filtered and means to distribute (15) the water to be filtered in the first section (8); the peculiarity of this device lays in that said distribution means (15) comprehend spraying means (17) for the water to be filtered which produce jets of the water to be filtered investing the influx surface (11) in order to produce an agitation of the sand granules extended all over the entire influx surface. The invention solves the drawbacks found in the known devices, as it enables to avoid appearance of fibrous agglomerations on the influx surface of the filtered water from the sand bed.

## Description

The present invention refers to a sand bed device for the filtering of liquids and particularly of water, especially, but not exclusively, to be used in the treatment of process water in plants for the production of the so-called non-woven fabric.

It is known that the production of non-woven fabric is a continuous production process exposing a layer of fabric to the action of water jets under pressure. As a consequence of the treatment made to the layer of fabric said water will be enriched with fibres. Therefore it will be collected in suitable tanks, sent to filtering devices which separate the impurities, and thereafter reintroduced into the plant to effect a new treatment. The filtering devices used nowadays consist of a casing formed like a closed cylinder, disposed in vertical position and raised above the bearing floor. Such casing is subdivided, seen from above, in a first section collecting the water to be filtered, in a second section housing the sand bed, and a third section collecting the filtered water. Such sand bed defines a superior influx surface of the water to be filtered. Furthermore, the device is provided with means to introduce into the casing the water to be filtered and means to distribute said water in the above-mentioned first section. In detail, such introduction means are constituted of a right-angled piping which penetrates the casing and the sand bed and flows centrally into the above-mentioned first section over the mentioned influx surface. Now the distribution means are formed by a fixed cross with four branches connected centrally to the piping end of the introduction means overhanging in the above-mentioned first section. Each of these branches is equipped with a plurality of ell shaped spouts with the free end turned towards the above-mentioned influx surface. These devices work in the following way: the water to be filtered is let into the casing by the introduction means and thereafter directed to the spouts through the cross branches from where it comes out in jets of approximate cylindrical shape which hit the above-mentioned influx surface. These jets exercise a pressure action on the influx surface in such a way that they move the superficial sand. Furthermore, they produce a vortex with the water to be filtered collected in the above-mentioned first section which maintains in suspension a certain quantity of sand. The aim of these actions is to hinder the forming of fibrous agglomerations on above-mentioned influx surface.

The main drawback raised in the known state of the art consists of the fact that during the functioning of the device on the above-mentioned influx surface will appear in a casual way fibrous agglomerations of plate shape. The appearance of these agglomerations brings consequent difficulties in the performance of a proper washing of the sand bed, as the bed backwashing stage will not manage to evacuate completely the agglomerations from the casing. Furthermore, the presence of such agglomerations will reduce the potential filtering surface corresponding to an apparent increase of the filtration speed and thus damaging the quality of the filtered water.

The principal aim of the present invention is to provide a sand bed device for the filtering of liquids and particularly of water which manages to avoid the appearance of fibrous agglomerations on the sand bed influx surface of the water to be filtered.

Within the scope of this aim, an object of the invention consists in setting up a device of a simplified construction in order to reduce to a minimum its production costs.

This aim, as well as these and other objects which will become better apparent afterwards are achieved by a sand bed device for the filtering of liquids and particularly of water, comprising a casing subdivided in a first section where to collect the water to be filtered, a second section to house said sand bed which defines an influx surface for said water to be filtered, in a third section collecting the filtered water, introduction means to introduce into said casing said water to be filtered and distribution means to distribute said water to be filtered in the said first section, characterized in that said distribution means comprise spraying means for said water to be filtered which produce jets of water to be filtered hitting the influx surface in order to produce an agitation of the sand granules extended all over the entire influx surface.

Further features and advantages of this invention will become better apparent from the description of a preferred but not exclusive embodiment thereof, illustrated only by way of non-limitative example in the attached three drawings, wherein:
- figure 1 is an elevation view, partly sectioned, of the device according to the invention;
- figure 2 is a schematic plan view from above of the distribution means of the device, according to the invention;

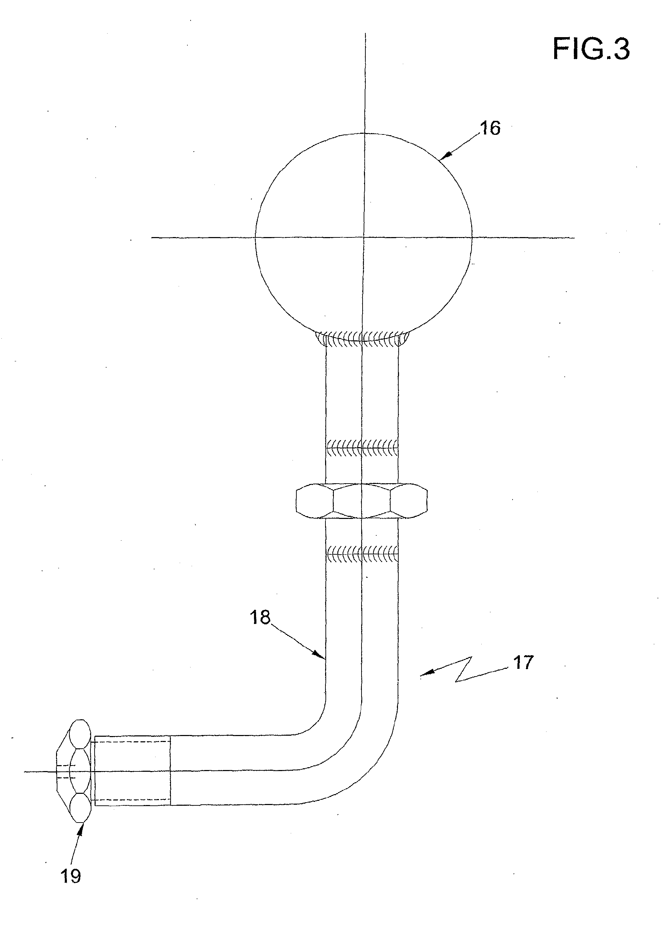

- figure 3 is a detailed lateral view of the spraying means of the device of figure 1.

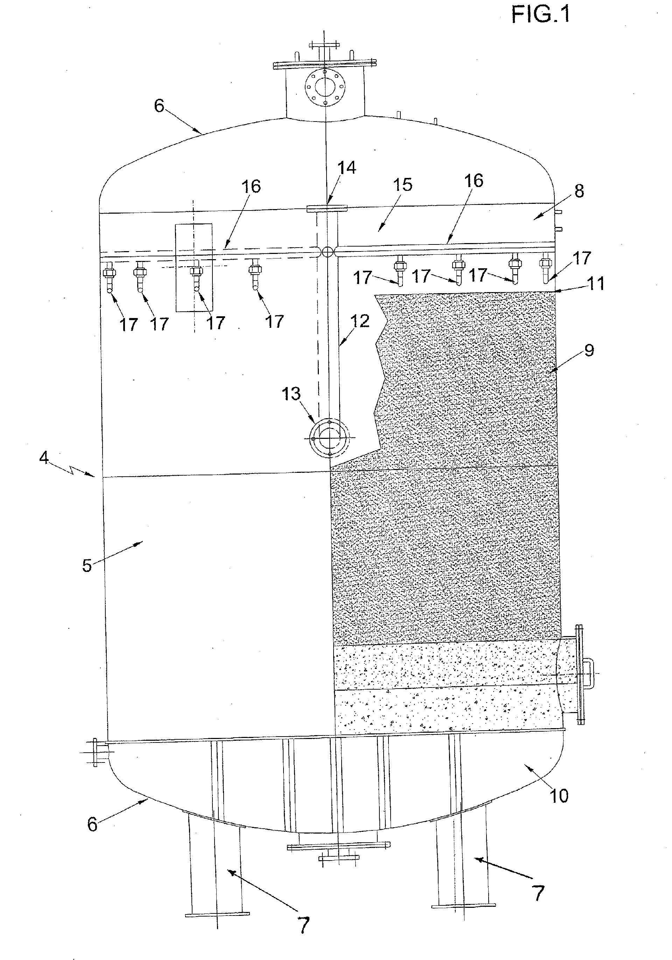

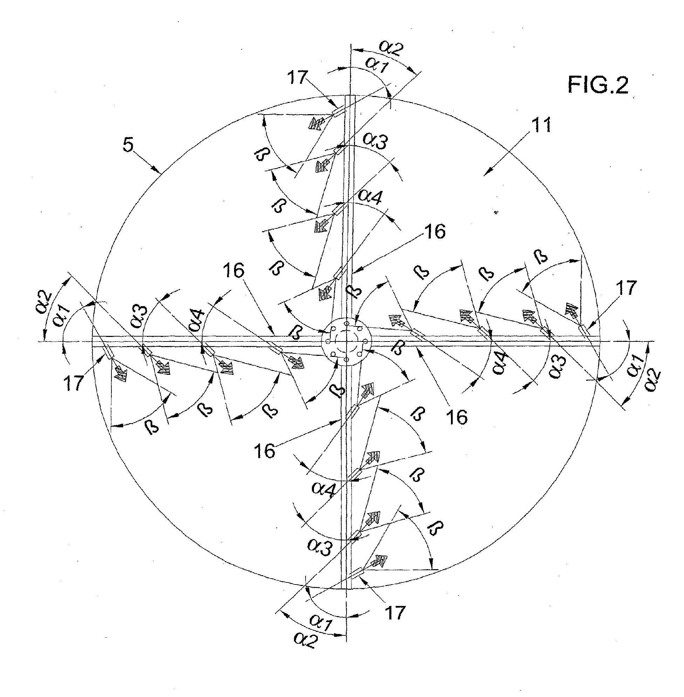

With reference to the figures of the attached drawings, and initially to the figure 1, the sand bed device for the filtering of liquids and particularly of water, generally designated by the reference numeral 4, is composed, according to the state of the art, of a cylindrical casing 5 closed at the ends by a pair of convex covers 6. This casing 5 lies in a raised position with respect to the floor plane by means of supporting feet 7. Inside this casing 5 are located the following three operative sections starting from the upper side: a first section designated by the reference numeral 8 where the water to be filtered is collected; a second section designated by the reference numeral 9 defined by the sand bed; a third section designated by the reference numeral 10 where the filtered water is collected. In particular, the sand bed 9 defines an influx surface for the water to be filtered designated by the reference numeral 11 in the figures 1 and 2. Furthermore, this sand bed 9 is constituted of three layers of sand with a granulometry decreasing from top to bottom as it results from figure 1. The device 4 is also equipped in the known way with introduction means to introduce into the casing 5 the water to be filtered. In detail and with reference to figure 1, these introduction means are constituted of an ell shaped tubing 12 which penetrates the casing 5 and the sand bed 9 and flows into the above-mentioned first section 8. The end 13 of the tubing 12 outside the casing 5 is linked by means of a flanged joint to the network of pipes (not illustrated) collecting the water to be filtered. The other end 14 of the tubing 12, on the contrary, is closed. To the above-mentioned introduction means are connected with distribution means, generally designated by the reference numeral 15, to distribute the water to be filtered in the first section 8. In detail, these distribution means 15 are constituted of a cross situated in the above-mentioned first section 8, composed of four branches 16 departing radially from the tubing 12 in correspondence with its blind end 14 forming between themselves right angles in the centre. The distribution means 15 then comprise four spraying means 17 applied in succession to each of the branches 16 as illustrated in figure 1 and with more details in figure 2. The function of such spraying means 17 is to form jets of water to be filtered coming into collision with the entire influx surface 11 of the sand bed 9 in order to create an agitation of the sand granules extended all over the above-mentioned influx surface 11 as illustrated schematically in figure 2. In detail, the distance between two consecutive spraying means 17 applied on one and same branch 16 increases getting nearer to the casing centre 5. This solution follows from the fact that the spraying means 17 of the four branches 16, lying on common circumferences with their centres on the centre of the casing 5, process ring crowns whose medium diameter decreases getting nearer to the centre of the casing 5, but whose extension remains constant. Furthermore, the above-mentioned spraying means 17 are applied on the above-mentioned branches 16 inclined towards the centre of the casing 5, that means defining with each branch 16 sharp angles α1, α2, α3 and α4 which decrease getting nearer to the casing centre 5 and turned towards said influx surface 11. These angles are equal to 60°, 45°, 45° and 35° respectively. This particular orientation of the spraying means 17 permits to direct the jets of water to be filtered in such a way to cover the whole influx surface 11. In detail, the above-mentioned spraying means 17 are composed of pipe fittings 18 welded at one end to the above-mentioned branches 16 and at the free end equipped with nozzles 19. These pipe fittings 18 are applied in correspondence with the outlet holes for the water to be filtered made on the above-mentioned branches 16 turned towards the influx surface 11. Furthermore, these pipe fittings 18 are shaped at 90° in order that the final pieces equipped at the ends with nozzles 19 are approximately horizontal. Now, the above-mentioned jets have a full conoid configuration defining a vertical angle β included between 45° and 90°. Preferably the angle at the vertex β is equal to 60° which represents the best compromise between the extension of the hit surface and the pressure action exercised on it.

Still with reference to the figures of the enclosed drawings, the device works as follows. During the filtering stage, the water to be filtered is let into the casing 5 by means of the tubing 12, then directed in the branches 16 of the cross so to leak out from the spraying devices 17 in form of full conical jets hitting the influx surface 11 of the sand bed. Thereafter the water to be filtered is collected in the above-mentioned first section 8 of the casing 5 penetrating gradually the sand bed 9 until, filtered, it leaks out from the sand bed bottom and collected in the above-mentioned second section 10.

It has been verified in practice how the device for the filtering of liquids and particularly of water achieves its scope and the prefixed aims surpassing the drawbacks raised in the state of the art. In fact this solution allows to avoid the appearance of fibrous agglomerations on the sand bed influx surface of the filtered water in order to permit utmost conditions for the filtering and backwashing stage.

In practice, the materials used, the forms, the dimensions and the execution details may be different from these here indicated, but technically equivalent to these, without for this reason to exceed the limits of the law for this invention.

## Claims

1. Sand bed device for the filtering of liquids and particularly of water, comprising a casing (5) subdivided in a first section (8) where to collect the water to be filtered, a second section (9) to house said sand bed which defines an influx surface (11) for said water to be filtered, in a third section (10) collecting the filtered water, introduction means to introduce into said casing (5) said water to be filtered and distribution means (15) to distribute said water to be filtered in the said first section (8), **characterized in that** said distribution means (15) comprise spraying means (17) for said water to be filtered which produce jets of water to be filtered hitting the influx surface (11) in order to produce an agitation of the sand granules extended all over the entire influx surface (11).

2. Device, according to claim 1, **characterized in that** said spraying means (17) are applied in succession to the branches (16) of a cross and depart from said introduction means forming right angles in the centre.

3. Device, according to claim 1, **characterized in that** the distance between two spraying means (17) increases getting nearer to the casing (5) centre.

4. Device, according to claim 1, **characterized in that** said spraying means (17) are inclined towards the centre of said casing (5) forming with said branches (16) of said cross sharp angles α1, α2, α3 and α4 which decrease getting nearer to said casing (5) centre and turned towards said influx surface (11).

5. Device, according to claim 4, **characterized in that** said angles α1, α2, α3 and α4 are equal to 60°, 45°, 45° and 35° respectively.

6. Device, according to claim 1, **characterized in that** said spraying means (17) are composed of pipe fittings (18) welded at one end to said branches (16) and at the free end equipped with nozzles (19).

7. Device, according to claim 6, **characterized in that** said pipe fittings (18) are applied in correspondence with the outlet holes of the water to be filtered made on said branches (16) turned towards said influx surface (11).

8. Device, according to claim 6, **characterized in that** said pipe fittings (18) are shaped at 90° in order that their final piece equipped at the end with nozzles (19) are approximately horizontal.

9. Device, according to claim 1, **characterized in that** said jets have a full conoid configuration defining a vertical angle β included between 45° and 90°.

10. Device, according to claim 9, **characterized in that** said angle β at the vertex is equal to 60°.
